# EUROPÄISCHE PATENTANMELDUNG

(11) **EP 0 954 970 A2**
(43) Veröffentlichungstag der Anmeldung: **10.11.1999**
(21) Anmeldenummer: 99107232.3
(22) Anmeldetag: 14.04.1999
(51) Int. Cl.: A21B 1/48

(54) **Backofen**

(30) Priorität: 06.05.1998 DE 19820066
(71) Anmelder: Werner & Pfleiderer Lebensmitteltechnik GmbH, 91550 Dinkelsbühl (DE)
(72) Erfinder: Dollinger, Rainer, 91550 Dinkelsbühl (DE); Hafner, Josef, 91626 Schopfloch (DE); Knost, Claudia, 91550 Dinkelsbühl (DE)
(74) Vertreter: Rau, Albrecht

(57) **Zusammenfassung**

Bei einem Backofen mit mindestens einem Herd ist jedem Herd (1 bis 5) ein Backband (9) zugeordnet, das über eine Umlenk-Walze (10) geführt ist. Die Umlenk-Walze (10) ist durch Öffnungen (29) aus dem Backofen herausgeführt und dort in Richtung des Ofens verschiebbar gelagert. Zur Abdichtung dieser Öffnung (29) ist jeweils eine Dichtungs-Einrichtung (25) vorgesehen, die eine Dichtungs-Grundplatte (26) und eine hierauf dicht anliegende Dichtungs-Scheibe (30) aufweist. Die Dichtungs-Scheibe (30) ist schwenkbar auf der Umlenk-Walze (10) gelagert und gleichzeitig mittels eines Führungszapfens (37) in einer Führungsnut (36) in der Dichtungs-Grundplatte (26) gelagert. Der Rand der Dichtungs-Scheibe (30) ist derart geformt, daß sie einerseits in allen Verschiebestellungen die Öffnung (29) abdeckt und andererseits in Verschieberichtung nur um einen Weg verschoben wird, der erheblich kleiner als der Verschiebeweg der Umlenk-Walze (10) ist.

## Beschreibung

Die Erfindung betrifft einen Backofen nach dem Oberbegriff des Anspruches 1.

Bei derartigen Backöfen, bei denen es sich regelmäßig um Mehr-etagen-Backöfen relativ großer Länge handelt, sind die temperaturbedingten Ausdehnungen des Gehäuses einerseits und des Backbandes andererseits sehr unterschiedlich. Aus diesem Grunde muß die Umlenk-Walze oder die Antriebs-Walze, in der Regel die Umlenk-Walze, in Längsrichtung des jeweiligen Herdes verschiebbar sein. Da die Lager der jeweiligen Walze außerhalb des Herdes, also auf der Außenseite der Seitenwände des Gehäuses angeordnet sind, muß jeweils eine Ausnehmung in der Seitenwand vorhanden sein, durch die die Walze bzw. deren entsprechender Wellen-Abschnitt nach außen geführt ist und in der sie in Längsrichtung des jeweiligen Herdes verschiebbar ist. Da zu Beginn eines Backprozesses, also unmittelbar nach einer Beschickung, das Backgut mit Dampf beschwadet werden muß, ist es wiederum notwendig, daß dieser Dampf für eine bestimmte Zeit im jeweiligen Backraum gehalten wird. Ein unkontrollierter Dampfaustritt durch die erwähnten Ausnehmungen würde zu backtechnischen Nachteilen führen und muß daher ausgeschlossen werden. Ein in der Praxis versuchtes Ausstopfen der Ausnehmungen mit einer Dichtungspackung aus Isoliermaterial hat nicht zu befriedigenden Ergebnissen geführt, zumal der Dampf in diesem Isoliermaterial auskondensiert und zu einer Durchfeuchtung führt. Es kommt hinzu, daß die Raumverhältnisse in Verschieberichtung der Walze sehr beengt sind.

Der Erfindung liegt daher die Aufgabe zugrunde. einen Backofen der gattungsgemäßen Art so auszugestalten, daß eine zuverlässige Dichtung der zur Hindurchführung der Walze dienenden Ausnehmungen auch bei in Verschieberichtung beengten Raumverhältnissen und großen Verschiebewegen der Walze sichergestellt ist.

Diese Aufgabe wird erfindungsgemäß durch die Merkmale im Kennzeichnungsteil des Anspruches 1 gelöst. Der Kern der Erfindung liegt darin, daß einerseits die langlochartige Ausnehmung durch die Dichtungs-Scheibe in allen Verschiebestellungen der Walze abgedeckt wird und daß andererseits die Dichtungs-Scheibe in Verschieberichtung keinen dem Verschiebeweg entsprechenden Überstand benötigt. Dieser Überstand kann extrem gering sein.

Die Unteransprüche geben vorteilhafte und zum Teil erfinderische Ausgestaltungen wieder.

Weitere Merkmale, Vorteile und Einzelheiten ergeben sich aus der nachfolgenden Beschreibung eines Ausführungsbeispieles anhand der Zeichnung. Es zeigt
- Fig. 1: einen stark schematisierten Längsschnitt durch einen Mehretagen-Durchlauf-Backofen,
- Fig. 2: einen Teil-Querschnitt durch das Kopf-Element des Backofens,
- Fig. 3: eine Teil-Seitenansicht des Kopf-Elementes des Backofens entsprechend dem Sichtpfeil III in Fig. 2,
- Fig. 4: eine Draufsicht auf eine Dichtungs-Grundplatte einer Dichtungs-Einrichtung entsprechend dem Sichtpfeil IV in Fig. 3 und
- Fig. 5: einen Schnitt durch Fig. 4 entsprechend der Schnittlinie V-V in Fig. 4.

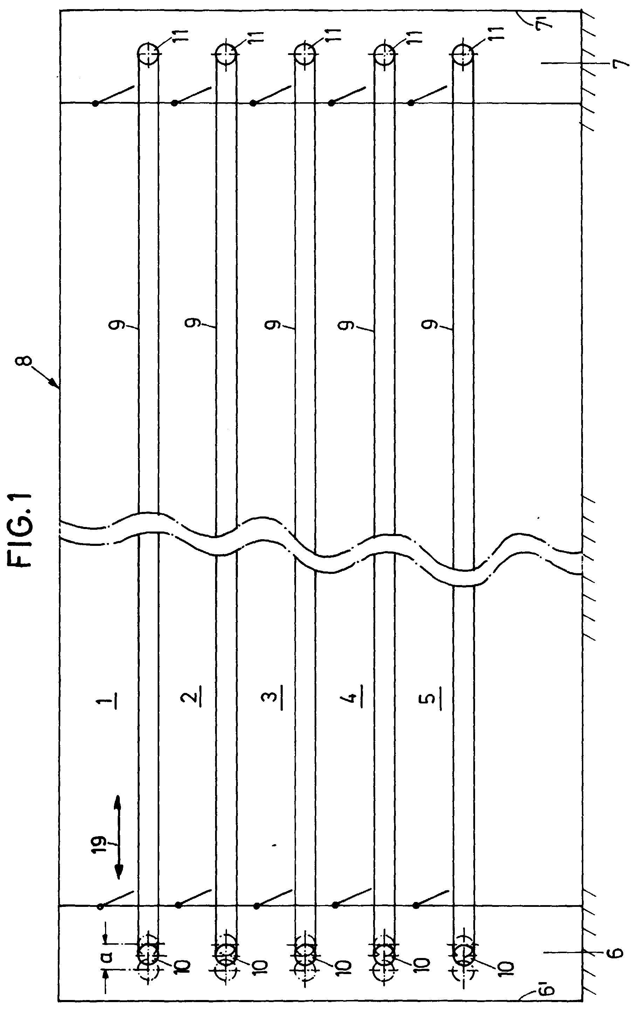

In Fig. 1 ist ein Mehretagen-Backofen angedeutet, der insgesamt übereinander fünf Herde 1 bis 5 aufweist. Der Backofen weist ein Kopf-Element 6 und ein Abschluß-Element 7 auf, die das Gehäuse 8 des Backofens auf der Beschickungsseite 6' bzw. der Entnahmeseite 7' begrenzen. Jedem Herd 1 bis 5 ist ein endloses Backband 9 zugeordnet, auf dem das Backgut durch die Backräume der Herde 1 bis 5 transportiert wird. Diese Backbänder 9 sind über Umlenk-Walzen 10 im Kopf-Element 6 und über Antriebs-Walzen 11 im Abschluß-Element 7 geführt. Die Antriebs-Walzen 11 sind gehäusefest gelagert, während die im Kopf-Element 6 gelagerten Umlenk-Walzen 10 horizontal, d.h. in der Richtung des jeweiligen Backbandes 9 verschiebbar, gelagert sind, um unterschiedliche temperaturbedingte Ausdehnungen des Gehäuses 8 einerseits und der Backbänder 9 andererseits ausgleichen zu können.

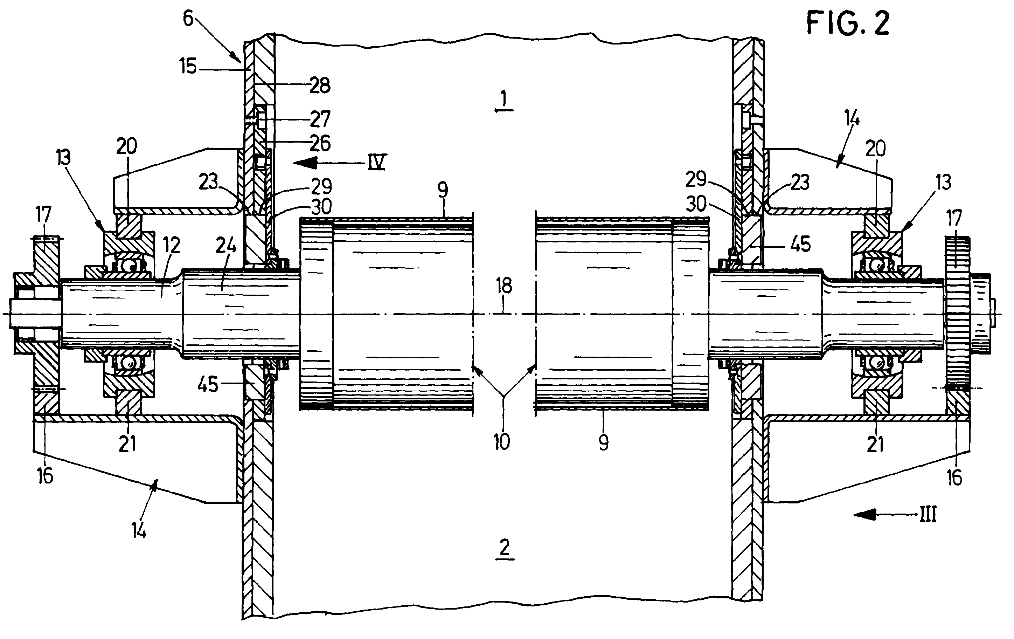

Wie Fig. 2 zu entnehmen ist, sind die Umlenk-Walzen 10 mit Lagerzapfen 12 beidseitig in Lagern 13 gelagert. Diese sind wiederum in Lagerböcken 14 abgestützt, die an der jeweiligen Außenseite der Seitenwände 15 des Kopf-Elementes 6 angebracht sind. Auf diesen Lagerböcken 14 sind auch Zahnprofile 16 angebracht, auf denen drehfest mit dem jeweiligen Lagerzapfen 12 und damit mit der Umlenk-Walze 10 verbundene Zahnritzel 17 abrollen. Dadurch, daß derartige in Zahnprofile 16 eingreifende Zahnritzel 17, die völlig identisch sind, vorgesehen sind, erfolgt eine Zwangskopplung der beiden Lagerzapfen 12, wodurch die Umlenk-Walze 10 exakt parallel zu sich selbst, d.h. zu ihrer Mittel-Längs-Achse 18, in der Verschieberichtung 19 in Längsrichtung des Backofens verschiebbar ist.

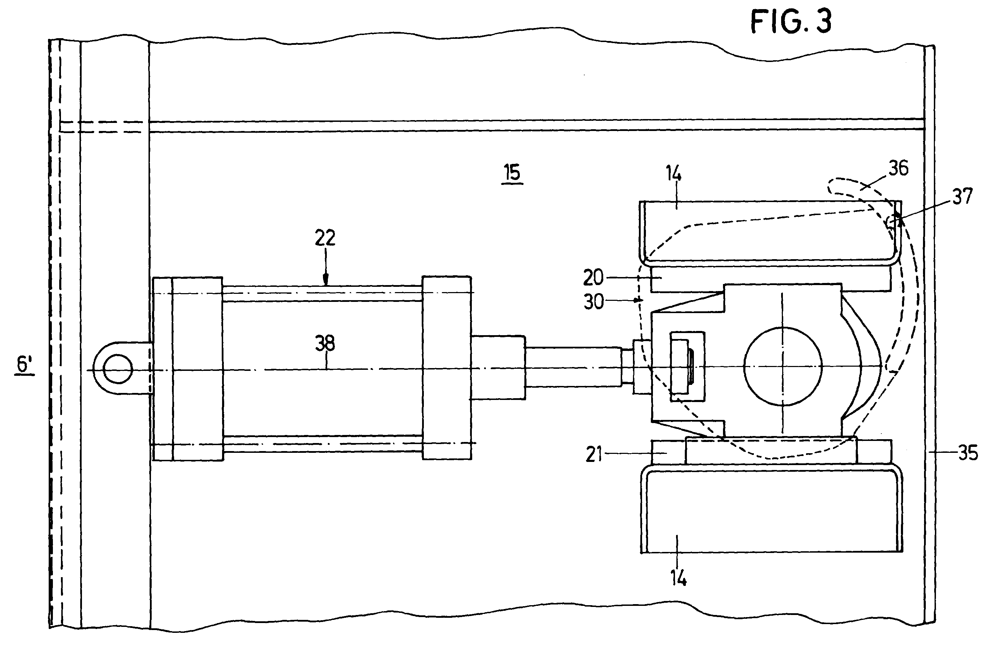

Wie Fig. 2 und 3 entnehmbar ist, ist jedes Lager 13 in einer in Verschieberichtung 19 verlaufenden oberen und unteren Führungsschiene 20 bzw. 21 verschiebbar geführt, die am jeweiligen Lagerbock 14 angebracht sind. Am Lager 13 greift weiterhin ein Spannglied 22 an, das beispielsweise als pneumatisch beaufschlagte Kolben-Zylinder-Einheit ausgebildet ist. Diese beiden Lagern 13 zugeordneten Spannglieder 22 beaufschlagen die beiden Lager 13 in Richtung zur Beschickungsseite 6', also in den Fig. 1 und 3 nach links.

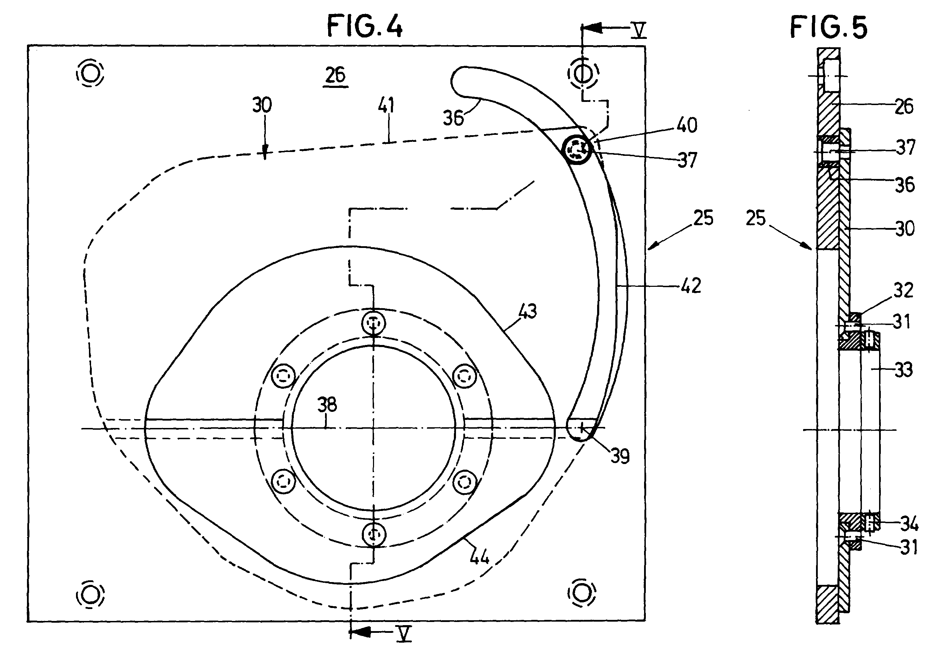

Wie in Fig. 2 nur angedeutet und in den Fig. 4 und 5 genauer dargestellt ist, weist die jeweilige Seitenwand 15 des Kopf-Elementes 6 eine Ausnehmung 23 auf, durch die die Lagerzapfen 12 aufweisende Welle 24 der Umlenk-Walze 10 nach außen geführt ist.

Aus montagetechnischen Gründen ist diese Ausnehmung 23 nicht kreisförmig mit einem dem Durchmesser der Welle 24 entsprechenden Durchmesser ausgebildet, sondern weist einen unrunden Querschnitt auf mit einer größeren Erstreckung in der horizontalen Verschieberichtung 19 als in der Vertikalen. Diese relativ große Ausnehmung 23 wird mittels einer Dichtungs-Einrichtung 25 abgedichtet. Hierzu ist eine Dichtungs-Grundplatte 26 mittels Schrauben 27 dampfdicht an die Innenseite 28 jeder Seitenwand 15 geschraubt, wobei gegebenenfalls Dichtungsmasse zwischen der Grundplatte 26 und der Seitenwand 15 aufgebracht ist. Diese Grundplatte 26 weist eine mit der Ausnehmung 23 deckungsgleiche Öffnung 29 auf. Die Abdichtung der Ausnehmung 23 bzw. Öffnung 29 erfolgt mittels einer Dichtungs-Scheibe 30, die von der Innenseite des Backofens her, also auf der dem jeweiligen Backraum zugewandten Seite, angeordnet ist und dicht an der Grundplatte 26 anliegt. Die Dichtungs-Scheibe 30 ist mittels Schrauben 31 lösbar mit einem Führungsring 32 verbunden, der frei drehbar aber im wesentlichen spielfrei und damit angenähert dampfdicht auf der Welle 24 gelagert ist. Der Führungsring 32 und damit die Dichtungs-Scheibe 30 wird in einer dicht an der Grundplatte 26 anliegenden Position durch einen Fixierring 33 gehalten, der mittels Klemmschrauben 34 auf der Welle 24 gehalten ist und ein Wandern des Führungsrings 32 mit der Dichtungs-Scheibe 30 in das Kopf-Element 6 hinein verhindert.

Da - wie insbesondere Fig. 3 entnehmbar ist - am Übergang vom Kopf-Element 6 zum Gehäuse 8 des Backofens ein, beispielsweise durch ein nach innen vorspringendes Wandelement 35 gebildetes Hindernis eine geradlinige Verschiebung einer Dichtungs-Scheibe 30 parallel zu sich selber in Verschieberichtung 19 über einen maximalen Verschiebeweg a von beispielsweise insgesamt 125 mm nicht zuläßt, sind Maßnahmen getroffen, um die Dichtungs-Scheibe 30 bei der Annäherung an dieses ein Verschiebe-Hindernis bildendes Wandelement 35 nach oben wegzuschwenken. Hierbei muß naturgemäß sichergestellt sein, daß die Dichtungs-Scheibe 30 die Ausnehmung 23 bzw. die Öffnung 29 in allen Verschiebestellungen vollständig abdichtet, also nicht nur Ausnehmung 23 und Öffnung 29 abdeckt, sondern um diese herum auch vollständig an der Grundplatte 26 anliegt. Hierzu ist in der Grundplatte 26 eine Führungsnut 36 ausgebildet, in die ein an der Dichtungs-Scheibe 30 angebrachter Führungszapfen 37 eingreift. Die Führungsnut 36 ist benachbart zu dem das Verschiebe-Hindernis bildenden Wandelement 35 angeordnet und erstreckt sich ausgehend von der in Verschieberichtung 19 durch die Mittel-Längs-Achse gehenden Verschiebe-Achse 38 des Spanngliedes 22 bzw. der Lager 13. Von hier erstreckt sich die Führungsnut 36 leicht gekrümmt nach oben und zwar zuerst noch leicht in Richtung zum Wandelement 35 und dann in entgegengesetzter Richtung, wie insbesondere Fig. 4 entnehmbar ist. Durch diese Ausgestaltung der Führungsnut 36 wird die Dichtungs-Scheibe 30 bei Verschiebungen aus ihrer am weitesten vom Spannglied 22 zurückgezogenen Stellung, in der sich der Führungszapfen 37 am unteren Anfangspunkt 39 der Führungsnut 36 befindet, so auf der Welle 24 verschwenkt, daß sich der dem Führungszapfen 37 benachbarte und dem Wandelement 35 zugewandte vordere Abschnitt 40 der Dichtungs-Scheibe 30 entlang dem Verlauf der Führungsnut 36 bewegt, wenn die Umlenkwalze 10 in Verschieberichtung 19 in Richtung zum Gehäuse 8 hin bewegt wird. Hierzu hat die Dichtungs-Scheibe 30 insbesondere beidseitig des Führungszapfens 37 zwei etwa rechtwinklig zueinander verlaufende Randabschnitte 41, 42. Diese liegen dann, wenn die Dichtungs-Scheibe 30 in ihrer völlig zur Beschickungsseite hin zurückgezogenen Stellung sich befindet, jenseits der zugeordneten Randbereiche 43, 44 der Ausnehmung 23 bzw. Öffnung 29. Beim Verschieben der Umlenk-Walze 10 in Richtung zum Wandelement 35 hin wird der untere Randabschnitt 42 aus einer um etwa 45° nach unten geneigten Stellung in eine etwa vertikale Stellung hochgeschwenkt, wie es in Fig. 4 dargestellt ist, und dann gegenüber der Vertikalen nach hinten geneigt. Die Dichtungs-Scheibe 30 wird also bei der relativ langen Verschiebung über einen Verschiebeweg a von beispielsweise 125 mm in Verschieberichtung 19 nicht über den Verlauf der Führungsnut 36 hinaus näher an das Wandelement 35 herangebracht. Die horizontale Verschiebebewegung der Dichtungs-Scheibe 30 wird also weitgehend in eine Verschwenkung nach oben umgesetzt, bei der der dem ein Verschiebe-Hindernis bildenden Wandelement 35 nächstliegende Bereich nicht näher an das Wandelement 35 herankommt.

Auch wenn - wie in Fig. 2 angedeutet - die Ausnehmung 23 und die Öffnung 29 mit herausnehmbarem Isoliermaterial 45 ausgefüllt ist, müssen Ausnehmung 23/Öffnung 29 vollständig abgedichtet werden.

Wenn die sonstigen Platzverhältnisse es zulassen, könnte die Führungsnut 36 selbstverständlich auch entsprechend nach unten verlaufen, also zur Verschiebeachse 38 gespiegelt angeordnet sein.

## Patentansprüche

1. Backofen
- mit einem Gehäuse (8) mit Seitenwänden (15),
- mit mindestens einem, im Gehäuse (8) ausgebildeten und durch dessen Seitenwände (15) begrenzten Herd (1 bis 5),
- mit einer an einem Ende jedes Herdes (1 bis 5) vorgesehenen Antriebs-Walze (11),
- mit einer am anderen Ende jedes Herdes (1 bis 5) vorgesehene Umlenk-Walze (10),
- mit einem über die Antriebs-Walze (11) und die Umlenk-Walze (10) geführten Backband (9),
- mit zwei auf den Außenseiten des Gehäuses (8) vorgesehenen, in einer horizontalen Verschieberichtung (19) in Längsrichtung des jeweiligen Herdes (1 bis 5) verschiebbaren Lagern (13) für mindestens eine Walze (10),
- mit je einer in jeder Seitenwand (15) ausgebildeten, von der verschiebbaren Walze (10) durchsetzten und einem maximalen Verschiebeweg (a) der Walze (10) angepaßten Ausnehmung (23), und
- einer Dichtungs-Einrichtung (25) zur Abdichtung der Ausnehmung (23) in jeder Verschiebestellung der Walze (10),
dadurch gekennzeichnet, daß
die Dichtungs-Einrichtung (25) eine vor der Ausnehmung (23) und schwenkbar auf der Walze (10) angeordnete Dichtungs-Scheibe (30) aufweist, die bei Verschiebungen der Walze (10) in Verschieberichtung (19) mittels eines in einer Führungsnut (36) geführten Führungszapfens (37) um die Mittel-Längs-Achse (18) der Walze (10) verschwenkbar ist, wobei der Rand der Dichtungs-Scheibe (30) derart geformt ist, daß sie einerseits in allen Verschiebestellungen die Ausnehmung (23) abdeckt und andererseits in Verschieberichtung nur um einen Weg verschoben wird, der erheblich kleiner als der Verschiebeweg (a) der Walze (10) ist.

2. Backofen nach Anspruch 1, dadurch gekennzeichnet, daß
die Dichtungs-Scheibe (30) an einer mit der Seitenwand (15) verbundenen Dichtungs-Grundplatte (26) dichtend anliegt, wobei die Führungsnut (36) an der Dichtungs-Grundplatte (26) und der Führungszapfen (37) an der Dichtungs-Scheibe (30) ausgebildet sind.

3. Backofen nach Anspruch 1 oder 2, dadurch gekennzeichnet, daß
die Dichtungs-Scheibe (30) mittels eines auf der Walze (10) befestigten Fixierrings (33) in ihrer abdichtenden Stellung relativ zur Mittel-Längs-Achse (18) der Walze (10) unverschiebbar gehalten wird.

4. Backofen nach einem der Ansprüche 1 bis 3, dadurch gekennzeichnet, daß
die Dichtungs-Scheibe (30) mittels eines Führungsrings (32) nach Art eines Gleitlagers auf der Walze (10) drehbar gelagert ist.

5. Backofen nach einem der Ansprüche 1 bis 4, dadurch gekennzeichnet, daß
die Führungsnut (36) im wesentlichen vertikal und beabstandet zur Verschiebeachse (38) entgegen der Verschieberichtung (19) läuft.
